# EUROPÄISCHE PATENTSCHRIFT

(11) **EP 1 964 202 B1**
(45) Veröffentlichungstag und Bekanntmachung des Hinweises auf die Patenterteilung: **01.05.2013**
(21) Anmeldenummer: 06818866.3
(22) Anmeldetag: 28.11.2006
(51) Int. Cl.: H01M 8/10, B01D 67/00, C08G 73/18

(54) **MEMBRANEN AUS POLYAZOLEN, VERFAHREN ZU IHRER HERSTELLUNG UND BRENNSTOFFZELLEN UNTER VERWENDUNG DERARTIGER MEMBRANEN**
MEMBRANES CONSISTING OF POLYAZOLES, METHOD FOR THEIR PRODUCTION AND FUEL CELLS USING SUCH MEMBRANES
MEMBRANES A BASE DE POLYAZOLE, LEUR PROCEDE DE FABRICATION ET PILES A COMBUSTIBLES UTILISANT LESDITES MEMBRANES

(30) Priorität: 08.12.2005 DE 102005058578
(43) Veröffentlichungstag der Anmeldung: 03.09.2008
(73) Patentinhaber: Volkswagen Aktiengesellschaft, 38440 Wolfsburg (DE)
(72) Erfinder: GOTTLÖBER, Manfred, 37547 Einbeck (DE); MÄHR, Ulrich, 14052 Berlin (DE); MELZNER, Dieter, 37075 Göttingen (DE); PRETORIUS, Carsten, 37176 Nörten-Hardenberg (DE); REICHE, Annette, 37079 Göttingen (DE); WEISSHAAR, Stefan, 37079 Göttingen (DE); GRONWALD, Oliver, 37085 Göttingen (DE)
(74) Vertreter: Reinstädler, Diane
(86) Internationale Anmeldenummer: PCT/EP2006/011381
(87) Internationale Veröffentlichungsnummer: WO 2007/065586

(56) Entgegenhaltungen:
- WO-A-2004/055097
- DE-A1- 10 117 687
- DE-A1- 10 228 657
- DE-U1-202005 001 541
- US-A1- 5 807 412
- US-A1- 6 099 988

## Beschreibung

Die Erfindung betrifft ein Verfahren zur Herstellung von Membranen aus höher molekularen Polyazolen, die im Hochtemperaturbereich bis 250 °C betreibbar sind.

Aus US-PS 5,525,436, EP 1 144 485 B1 und WO 02/071518 A1 sind Hochtemperatur-Polymerelektrolyt-Membran-Brennstoffzellen (HT-PEM-FC) bekannt, welche Polymer-elektrolyt-Membranen (PEM) auf Basis von Polyazolen, insbesondere von Polybenzimidazolen (PBI), wie Poly[2,2-(m-phenylen)-5,5 bisbenzimidazol] enthalten. Die notwendige Protonenleitfähigkeit der Polymerelektrolyt-Membranen wird durch Dotierung mit Phosphorsäure erreicht. Die Membranen weisen in Abwesenheit von Wasser Leitfähigkeiten größer 1 S/m bei 25 °C auf. Brennstoffzellen mit solchen Membranen können bei Temperaturen oberhalb 100 °C betrieben werden.

Polyazole können anhand ihrer inhärenten Viskosität bzw. Grenzviskosität charakterisiert werden. Mit Hilfe eines Ubbelohde-Viskosimeters der Firma Schott wird dazu die kinematische Viskosität an einer 1-Gew.-%igen Lösung des Polyazols in N,N-Dimethylacetamid bei 25 °C bestimmt. Über die relative Viskosität kann daraus die inhärente Viskosität errechnet werden. Ausgehend von der inhärenten Viskosität lässt sich mit Hilfe der Mark-Houwink-Beziehung eine zahlenmittlere Molmasse des Polymers in g/mol errechnen. Üblicherweise werden bei der Herstellung von PEM Polyazole verwendet, die eine inhärente Viskosität von weniger als 1,1 dl/g aufweisen (WO 00/44816 A1).

Durch verschiedene Maßnahmen wurde versucht, die mechanische Stabilität von Polyazol-Membranen, die in HT-PEM-FC eingesetzt werden sollen, zu erhöhen. Dazu zählen die Nachbehandlung von zur Dotierung mit H₃PO₄ vorgesehenen PBI-Membranen mit einer Behandlungs-Flüssigkeit mit dem Ziel der Entfernung von organischen Restlösungsmitteln (WO 02/071518 A1), die Verwendung ausgewählter PBI-Polymere mit Teilchengrößen im Bereich von 300 bis 1000 µm (EP 1404745 B1) und die Verbrückung der Membranen mit Diepoxiden oder Diisocyanaten als Verbrückungsmittel (WO 00/44816). Insbesondere die Entfernung von Restlösungsmittelmengen, um die Membran "weichermacherfrei" herzustellen, ist nur mit sehr großem Aufwand zu realisieren. In der Polymermembran existieren sehr starke Wechselwirkungen zwischen der Polymermatrix und dem Lösungsmittel, so dass das Lösungsmittel nicht mit einfachen Verfahren wie Extraktion oder thermische Behandlung aus der Membran entfernt werden kann. (E. Fekete und Z. Peredy, "Effect of specific interactions on film casting of high temperature polymers" in Polymer Bulletin, Vol. 39, Seiten 93-99 (1997)). Nach der EP 1373379 B1 soll durch Zugabe eines basischen Katalysators bei der Verbrückung eine verbesserte Bruchzähigkeit dotierter PBI-Membranen erreichbar sein. Trotz dieser Maßnahmen lässt die mechanische Stabilität, die Handhabbarkeit und die Bruchzähigkeit derartiger Membranen, insbesondere nach ihrer Dotierung mit Phosphorsäure, nach wie vor zu wünschen übrig. Nachteilig ist darüber hinaus der hohe verfahrenstechnische Aufwand bei der Durchführung der genannten Maßnahmen, wie zusätzliche Waschschritte oder die Klassierung der Ausgangsstoffe, wodurch die Membranherstellung verkompliziert und verteuert wird.

Der Erfindung liegt deshalb die Aufgabe zu Grunde, ein Verfahren zur Herstellung verbesserter Membrane für Hochtemperatur-Brennstoffzellen bereitzustellen, die eine erhöhte mechanische Stabilität aufweisen, nach Dotierung mit Phosphorsäure bei den Betriebstemperaturen der Hochtemperatur-Brennstoffzellen eine hohe Langzeitstabilität besitzen..

Diese Aufgaben werden durch das in Anspruch 1 definierte Verfahrens gelöst. Vorteilhafte Weiterbildungen werden durch die abhängigen Ansprüche definiert.

Im erfindungsgemäßen Verfahren werden Polyazole verwendet, die über eine inhärente Viskosität größer 1,1 dl/g bis etwa 1,9 dl/g verfügen, bevorzugt ist ein Bereich von 1,3 bis 1,7 dl/g und besonders bevorzugt von 1,4 bis 1,6 dl/g. In einer bevorzugten Ausführungsform bestehen die Polyazole aus Polybenzimidazolen (PBI), insbesondere aus Poly[2,2-(m-phenylen)-5,5 bisbenzimidazol]. Vorzugsweise sind Polymere verwendbar, die ausgewählt sind aus der Gruppe umfassend Polybenzimidazole, Polyimidazole, Polybenzthiazole, Polybenzoxazole, Polyoxadiazole, Polychinoxaline, Polythiadiazole, oder eine Kombination von zwei oder mehreren davon. Die vorzugsweise verwendeten hochmolekularen Polyazole weisen unter Atmosphärendruck in organischen Lösungsmitteln eine verbesserte Löslichkeit von mindestens 80 Gew.-% auf und werden aus entsprechenden Monomeren eines aromatischen Diaminderivates und einem Monomeren einer aromatischen Dicarbonsäure oder ihres Derivates hergestellt. Das Verfahren umfasst ein Erhitzen eines Präpolymers über ein Temperatur-Zeit-Programm. Überraschenderweise wurde gefunden, dass sich derartige Ausgangsstoffe mit den genannten hohen inhärenten Viskositäten bzw. hohen Molekulargewichten durch eine gute Löslichkeit unter Atmosphärendruck in polaren aprotischen organischen Lösungsmitteln, insbesondere in N,N-Dimethylacetamid, auszeichnen. Bisher wurde davon ausgegangen, dass hochmolekulares Polybenzimidazol mit einer inhärenten Viskosität >1,5 dl/g unlöslich ist oder nur unter sehr drastischen Lösungsbedingungen in Lösung zu bringen ist (H. Vogel und C. S. Marvel, "Polybenzimidazoles, New Thermally Stable Polymers" in Journal of Polymer Science, Vol. L., Seiten 511-539 (1961); Roya Ameri, "Polybenzimidazole film containing phosphoric acid as proton exchange membrane (PEM)", Dissertation, Case Western Reserve University, May 1997)). Danach müssen für die Lösungsherstellung Additive wie LiCl zugesetzt werden, damit hochmolekulares Polybenzimidazol in Lösung gebracht werden kann. Diese Additive müssen anschließend durch zusätzliche Verfahrensschritte aus den Membranen wieder entfernt werden, da z.B. Chloridionen die elektrochemische Aktivität dotierter Membranen negativ beeinflussen würden. Bei den erfindungsgemäßen Membranen handelt es sich um getemperte Membranen, die bei Temperaturen im Bereich von 120 bis 500 °C so lange getempert sind, bis der Gehalt an Lösungsmitteln in den Membranen weniger als 5 Gew.-% beträgt, bevorzugt weniger als 2 Gew.-% und noch mehr bevorzugt weniger als 1 Gew.-%. In einer ganz besonders bevorzugten Ausführungsform der Erfindung beträgt der Gehalt an Restlösungsmitteln weniger als 0,1 Gew.-%. Enfindungsgemäß erfolgt durch Tempern bei ansteigenden Temperaturen oder in unterschiedlichen Temperaturintervallen eine allmähliche oder stufenweise Entfernung des Lösungsmittels, weil dadurch Spannungen in der Membran vermieden werden und somit eine homogene Membranschicht ohne Verwerfungen erzeugt werden kann. Das Tempern führt darüber hinaus zu Membranen, welche in den polaren aprotischen organischen Lösungsmitteln eine stark verminderte Löslichkeit aufweisen. Der unlösliche Anteil an Polymer in den erfindungsgemäß hergestellten Membranen kann durch das Tempern eingestellt werden. Er beträgt in N,N-Dimethylacetamid mindestens 70 %, vorzugsweise mindestens 80 % und besonders bevorzugt mehr als 98 %. Die Membranen mit einem hohen unlöslichen Anteil an Polymer haben eine erhöhte mechanische und thermische Beständigkeit. Die mit dem erfindungsgemäßen Verfahren hergestellten Membranen sind in hohem Maße zur Aufnahme von Dotierungsmitteln, wie beispielsweise Phosphorsäure, in der Lage. Aus den Membranen können durch Dotierung mit Phosphorsäure protonenleitende Polymerelektrolyt-Membranen (PEM) hergestellt werden, die eine hervorragende Langzeitstabilität bei Temperaturen bis 250 °C aufweisen. So konnten bei einer mit dem erfindungsgemäßen Verfahren hergestellten Membran nach Beispiel 1c bei Verwendung in einer bei 160 °C mit Wasserstoff betriebenen Brennstoffzelle selbst nach 1000 Stunden keine Ermüdungserscheinungen festgestellt werden.

Das erfindungsgemäße Verfahren zur Herstellung von Membranen auf Basis von Polyazolen umfasst die folgenden Schritte:
a) Herstellen einer Lösung der Polyazole in organischen Lösungsmitteln, wobei ein Polyazol verwendet wird, das in einer 1-Gew.-%igen Lösung in N,N-Dimethylacetamid bei 25 °C eine inhärente Viskosität von größer als 1,1 dl/g aufweist,
b) Ausformen der erhaltenen Lösung zu einer Membranform,
c) Erwärmen der in die Membranform gebrachten Lösung auf eine Temperatur im Bereich von 50 bis 90 °C bis zur Ausbildung einer selbsttragenden Membran und
d) Tempern der aus Schritt c) erhaltenen Membran bei Temperaturen im Bereich von 120 bis 500 °C, bis der Gehalt an Lösungsmitteln in der Membran weniger als 5 Gew.-% beträgt,
wobei in Schritt c) die Membran bei stufenweise oder allmählich ansteigenden Temperaturen getempert wird und während des Temperns unter Spannung gehalten wird.

Die Konzentration der Polyazole in der Lösung gemäß Schritt a) liegt im Bereich von 3 bis 30 Gew.-%, vorzugsweise 10 bis 25 Gew.-% und mehr bevorzugt 12 bis 15 Gew.-% bezogen auf die fertige zum Ausformen verwendete Lösung. Die Polyazollösung kann ohne weitere Prozessschritte, wie Zusatz von Vernetzungsreagenzien oder Additiven, verwendet werden. Das Ausformen der Polyazollösung zu einer Membranform gemäß Schritt b) kann mittels Rakel-, Sprühverfahren oder Extrusionsdüsen, insbesondere im Falle von Hohlfasermembranen, erfolgen. Die Ausformung der Membran erfolgt im Falle einer Flachmembranform vorzugsweise auf einer Unterlage. Im Schritt c) erfolgt ein Erwärmen der in die Membranform gebrachten Lösung auf eine Temperatur im Bereich von 50 bis 90 °C, vorzugsweise von 65 bis 75 °C bis zur Ausbildung einer selbsttragenden Membran. Im Falle von Flachmembranen wird die Membran dann von der Unterlage entfernt. Das Tempern der Membran wird gemäß Schritt d) bei Temperaturen im Bereich von 120 bis 500 °C durchgeführt, vorzugsweise oberhalb 200 °C, besonders bevorzugt oberhalb 300 °C und in Abhängigkeit von dem Polyazol bevorzugt oberhalb von 400 °C. Das Tempern wird so lange durchgeführt, bis der Gehalt an Lösungsmitteln in der Membran weniger als 5 Gew.-% beträgt, wobei ein Gehalt von weniger als 2 Gew.-% bevorzugt wird, noch mehr bevorzugt wird ein Gehalt von weniger als 1 Gew.-%. In einer ganz besonders bevorzugten Ausführungsform der Erfindung wird der Gehalt an Restlösungsmitteln auf weniger als 0,1 Gew.-% gesenkt. Ein hoher Gehalt an Restlösungsmitteln wirkt sich negativ auf die mechanischen Eigenschaften und die Temperaturbeständigkeit der Membranen aus, insbesondere bei dotierten Membranen. Das Lösungsmittel und seine Zersetzungsprodukte können bei höheren Temperaturen zu Schädigungen der Membranen führen. Das Tempern kann dazu über einen Zeitraum von 1 Minute bis zu 5 Stunden, vorzugsweise von 2 bis 15 Minuten und besonders bevorzugt von weniger als 10 Minuten durchgeführt werden.

Nach einer weiteren Ausführungsform der Erfindung werden die Membranen im Rahmen eines kontinuierlichen Verfahrens gefertigt Dazu werden die Membranen beispielsweise während des Temperns über mindestens einen erwärmten sich drehenden Zylinder geführt, dessen Mantel zumindest teilweise aus porösen Materialien besteht, wobei die Membranen die äußere Manteloberfläche des mindestens einen Zylinders teilweise umschlingen. Dabei wurde gefunden, dass das zu entfernende Restlösungsmittel nicht nur über die Oberfläche der Membran, die der Wandung des Zylinders abgewandt ist, durch Wärmeeinwirkung des Zylinders entweicht, sondern dass auch über die Oberfläche der Membran, die an der Wandung des Zylinders anliegt, Restlösungsmittel abgeführt wird, wodurch eine unerwünschte Ausbildung von Gasblasen innerhalb der Membran und zwischen der Membran und der Zylinderwandung vermieden wird. Dadurch werden homogene Membranen ohne Fehlstellen gebildet. Die Erzeugung homogener Membranstrukturen wird auch noch dadurch weiter unterstützt, indem die Membranen während des Temperns unter Spannung gehalten werden. In einer weiteren Ausführungsform des erfindungsgemäßen Verfahrens werden die Membranen über mehrere Zylinder geführt, wobei an jedem Folgezylinder eine höhere Temperatur angelegt wird. Durch diesen besonders schonenden Temperprozess erfolgt kein abruptes Austreiben an Restlösungsmittel, sondern ein schonendes, was dazu führt, dass ohne Membranschädigung der Gehalt an Restlösungsmittel bis auf weniger als 0,1 Gew.-% gesenkt werden kann. Gleichzeitig wird dabei offensichtlich die Struktur innerhalb der Polyazolpolymere so verändert, dass ohne Beeinträchtigung der äußeren Form der Membranen der Anteil an löslichen Polymeren stark herabgesetzt wird, wodurch die mechanische Stabilität und thermische Langzeitstabilität, insbesondere der dotierten Membranen, deutlich erhöht wird.

Das Temperaturprofil, das auf die Membranen angewandt wird, kann z.B. in der ersten Stufe zwischen 120 °C und 200 °C. in der zweiten Stufe zwischen 200 °C und 350 °C, in der dritten Stufe zwischen 350 °C und 500 °C liegen. Bevorzugt Bereiche betragen in der ersten Stufe zwischen 150 °C und 170 °C, in der zweiten Stufe zwischen 230 °C und 320 °C, in der dritten Stufe zwischen 370 °C und 400 °C. In weiteren Ausführungsformen der Erfindung wurden für Polybenzimidazolmembranen gute Ergebnisse erzielt, wenn das Tempern bei einer Temperatur von 300 °C über einen Zeitraum von 2 bis 10 Minuten, oder wenn das Tempernstufenweise bei Temperaturen von 120 bis 500 °C über einen Gesamtzeitraum von weniger als 15 Minuten durchgeführt wurde.

Als organischen Lösungsmittel können in dem erfindungsgemäßen Verfahren polare aprotische Lösungsmittel verwendet werden, wobei N,N-Dimethylacetamid bevorzugt wird. Unter den Polyazolen werden erfindungsgemäß Polybenzimidazole und darunter insbesondere das Poly[2,2-(m-phenylen)-5,5 bisbenzimidazol] bevorzugt eingesetzt. Verwendbar sind aber auch Polymere, die ausgewählt sind aus der Gruppe umfassend Polybenzimidazol, Polyimidazole, Polybenzthiazole, Polybenzoxazole, Polyoxadiazole, Polychinoxaline, Polythiadiazole, oder eine Kombination von zwei oder mehreren davon.

Durch das erfindungsgemäße Verfahren werden offensichtlich gleichzeitig drei Effekte für die Verbesserung der Eigenschaften der Polyazolmembranen bewirkt. Erstens führt die Verwendung von Polyazolen als Ausgangspolymer mit einer hohen Molmasse bereits aus sich heraus zu mechanisch stabileren Membranen, zweitens bewirkt die starke Herabsetzung des Gehaltes an Restlösungsmitteln in den Membranen verbesserte mechanische Eigenschaften und drittens führt das Tempern zu einer starken Herabsetzung der Löslichkeit der Polyazolpolymere in den Membranen, wodurch ihre weitere mechanische und thermische Stabilisierung sowie eine gute Handhabbarkeit bei der Verarbeitung zu Membran-Elektroden-Einheiten für Brennstoffzellen erreicht wird.

Die mit dem erfindungsgemäßen Verfahren hergestellten Membranen können zur Herstellung von Brennstoffzellen verwendet werden. Die Brennstoffzellen bestehen aus mindestens einer Membran-Elektroden-Einheit (MEA), welche z.B. aus zwei flächigen Gasdiffusionselektroden, welche mit dem Dotierungsmittel imprägniert sind, und einer sandwichartig dazwischen angeordneten, mit dem efindungsgemäßen Verfahren hergestellten flächigen Membran ausgestattet ist. Sie sind als HTPEM-FC für eine Arbeitstemperatur bis mindestens 250 °C geeignet. Die Gasdiffusionselektroden sind derart mit dem Dotierungsmittel, vorzugsweise mit Phosphorsäure, beladen, dass sie ein Dotierungsmittelreservoir für die Membran darstellen, wobei die Membran durch Aufnahme des Dotierungsmittels unter Einwirkung von Druck und Temperatur protonenleitend wird und protonenleitend an die Gasverteilungselektroden angebunden ist. Alternativ ist es auch möglich, die efindungsgemäßen Membranen vor dem Zusammenfügen zur MEA direkt mit dem Dotierungsmittel zu dotieren. Als Dotierungsmittel wird vorzugsweise Phosphorsäure verwendet.

Die mit den Membranen ausgestatteten HT-PEM-FC können mit Wasserstoff oder mit Methanolgas als Brennstoff betrieben werden. Als Oxidationsmittel wird bevorzugt Luft eingesetzt.

Die Erfindung soll nun anhand der Figur und der Ausführungsbeispiele näher beschrieben werden.

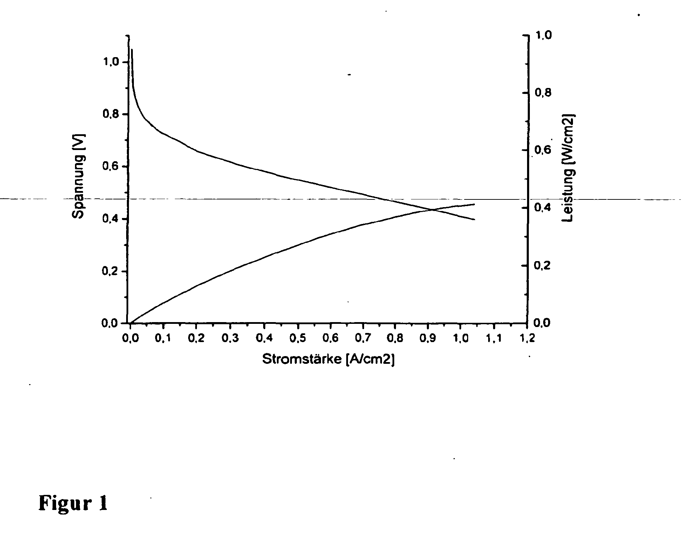

Dabei zeigt die Figur 1 eine graphische Darstellung der Kennlinie einer erfindungsgemä-βen Brennstoffzelle mit einer nach Beispiel 1 c hergestellten Membran.

### Beispiel 1

### Polyazollösungen aus PBI

39g PBI wurden in 261g N,N-Dimethylacetamid gelöst. Die verwendeten Polybenzimidazole sind in Tabelle 1 charakterisiert.

**Tabelle 1**

| Lösung | Inhärente Viskosität [dl/g] | Molekulargewicht [g/mol] | Dispersionsindex der Lösung [-] |
|---|---|---|---|
| a) | 0,3 | 31000 | 3,3 |
| b) | 1,1 | 170000 | 3,5 |
| c) | 1,6 | 225000 | 3,7 |

Der Dispersionsindex wurde mit Hilfe der Gelpermeationschromatographie bestimmt und gibt das Verhältnis der Molekulargewichtsverteilungen des Gewichtsmittels und des Zahlenmittels an. Die Messungen wurden an einem Gerät der Firma PolymerStandardServices durchgeführt.

### Beispiel 2

### Herstellen der Membranen aus den Polyazollösungen nach Beispiel 1

Aus den in der Tabelle 1 angeführten Polymerlösungen 1a) bis 1c) wurden die Membranen a) bis c) hergestellt. Dazu wurden die erhaltenen Lösungen auf einer Unterlage zu einer flachen Membranform ausgeformt. Die Auftragsdicke betrug 300 µm. Die in Membranform gebrachte Lösung wurde so lange auf eine Temperatur von 70 °C erwärmt, bis sich eine selbsttragende Membran ausgebildet hatte. Anschließend wurden die Membranen stufenweise 2 Minuten bei 150 °C, 2 Minuten bei 250 °C und 4 Minuten bei 330 °C getempert. Die so hergestellten Membranen wiesen eine Dicke von ca. 45 µm auf und konnten zur Fertigung von Membran-Elektroden-Einheiten eingesetzt werden.

### Beispiel 3

### Messen mechanischen Eigenschaften

Um die mechanische Stabilität der Membranen beurteilen zu können, wurden Zug-Spannungsmessungen durchgeführt Hierzu wurden Membranproben mit einer Länge von 10 cm und einer Breite von 2 cm in einer Messapparatur Z 2.5 der Firma Zwick GmbH & Co. eingespannt und mit einer Geschwindigkeit von 5 mm/min auseinandergezogen. Die Tabelle 2 fasst die Ergebnisse der mechanischen Untersuchungen zusammen.

**Tabelle 2**

| Membran | Inhärente Viskosität [dl/g] | Molekulargewicht [g/mol] | Maximale Zugspannung [MPa] | Dehnung [%] | Elastizitätsmodul [MPa] |
|---|---|---|---|---|---|
| a) | 0,3 | 31000 | <100 | <5 | <2000 |
| b) | 1,1 | 170000 | 145 | 5 | 5300 |
| c) | 1,6 | 225000 | 157 | 8 | 5800 |

Die maximale Zugspannung ist die maximale Kraft, mit der die Probe auseinander gezogen werden kann. Die angegebene Dehnung ist die Dehnung der Probe bei der maximalen Zugspannung. Der Elastizitätsmodul ist das Verhältnis aus Zugspannung und Dehnung bei geringen Kräften.

Mit steigendem Molekulargewicht verbessern sich die mechanischen Eigenschaften der Polymermembran.

### Beispiel 4

### Bestimmen des unlöslichen Anteils

Von nach Beispiel 2 hergestellten Membranen wurde der unlösliche Anteil an PBI mittels Extraktion in N,N-Dimethylacetamid bestimmt. Dazu wurde eine Probe aus einem Membranstück von 7,5 cm x 7,5 cm Kantenlänge mit bekanntem Ausgangsgewicht ausgestanzt und in einen Rundkolben gegeben. Es wurde in jedem Versuch jeweils die gleiche Menge an N,N-Dimethylacetamid in den Rundkolben zugegeben, bis das Polymerstück ganz mit Flüssigkeit bedeckt war. Der Rundkolben wurde mit Hilfe eines Ölbades auf 130 °C erhitzt. Nach einer Stunde unter Rühren wurde auf Raumtemperatur abgekühlt und das Lösungsmittel abfiltriert. Die Probe wurde über Nacht im Trockenschrank bei 200 °C getrocknet. Nach der Trocknung wurde die Probe zum Abkühlen auf Raumtemperatur in einen mit Trockenperlen gefüllten Exsikkator gestellt, der auf 100 mbar evakuiert wurde. Der unlösliche Polymeranteil wurde gravimetrisch ermittelt. Die Ergebnisse sind in der Tabelle 3 wiedergegeben.

**Tabelle 3**

| Membran | Inhärente Viskosität [dl/g] | Molekulargewicht [g/mol] | Unlöslicher Anteil [%] |
|---|---|---|---|
| a) | 0,3 | 31000 | 0 |
| b) | 1,1 | 170000 | 57 |
| c) | 1,6 | 225000 | 87 |

### Beispiel 5

### Bestimmen des Restlösemittelaehaltes

Die nach Beispiel 2 hergestellten Membranen wurden mittels Thermogravimetrie hinsichtlich des Restlösemittelgehaltes untersucht. Die Thermogravimetrie wurde gekoppelt an eine IR-Spektroskopie, um spektroskopisch festzustellen, ob der Masseverlust dem Lösungsmittel N,N-Dimethylacetamid zuzuordnen ist. Die Massenänderungen wurden mit der Thermowaage Netzsch-TG 209 F1 Iris gemessen, die spektroskopische Untersuchung wurde mit dem Infrarotspektrometer Bruker FTIR Tensor durchgeführt.

Es wurde gefunden, dass lediglich 0,3 Gew.-% N,N-Dimethylacetamid in den Membranen zurück geblieben war.

### Beispiel 6

### Herstellen einer Brennstoffzelle

Für die Herstellung einer Brennstoffzelle wurde die nach Beispiel 1c hergestellte Membran in 104 cm² große quadratische Stücke geschnitten. Kommerziell erhältliche ELAT-Elektroden mit 2,0 mg/cm² Pt-Beladung und einer Fläche von 50 cm² der Firma E-TEK werden mit 1,15 g H₃PO₄ beladen. Die H₃PO₄ -imprägnierten Elektroden wurden mit der erfindungsgemäßen Membran als Membran-Elektroden-Einheit (MEA) heiß verpresst. Die Membranelektrodeneinheit wurde in eine Testbrennstoffzelle der Firma Fuel Cell Technologies, Inc. eingebaut. Die Testbrennstoffzelle wurde mit einer Anpresskraft von 15 bar verschlossen.

### Beispiel 7

### Bestimmen Leistunosparameter Brennstoffzelle nach Beispiel 5

In der Fig. 1 ist der Verlauf einer Strom-Spannungskurve für eine nach Beispiel 6 hergestellte Brennstoffzelle mit einer MEA bei 160 °C aufgezeigt. Der Gasfluss für H₂ betrug 170 ml/min und für Luft 570 ml/min. Die Leistungsparameter wurden an einem FCATS Advanced Screener der Firma Hydrogenics Inc. ermittelt. Bei 3 bar abs. wird eine maximale Leistungsdichte von 0,41 W/cm² und eine Stromdichte von 1,0 A/cm² gemessen. Bei 4 bar abs. wird eine maximale Leistungsdichte von 0,49 W/cm² und eine Stromdichte von 1,2 A/cm² erzielt Dabei wurden trockene unbefeuchtete Gase eingesetzt Die Brennstoffzelle zeigt unter den angegebenen Testbedingungen eine Impedanz von 700 mΩcm² bei einer Messfrequenz von 1700 Hz.

Nach Betriebsdauer von 1000 Stunden zeigte die Membran keinerlei Ermüdungserscheinungen.

## Patentansprüche

1. Verfahren zur Herstellung von Membranen aus Polyazolen mit den folgenden Schritten:
a) Herstellen einer Lösung der Polyazole in organischen Lösungsmitteln, wobei ein Polyazol verwendet wird, das in einer 1-Gew.-%igen Lösung in N,N-Dimethylacetamid bei 25°C eine inhärente Viskosität von größer als 1,1 dl/g aufweist,
b) Ausformen der erhaltenen Lösung zu einer Membranform,
c) Erwärmen der in die Membranform gebrachten Lösung auf eine Temperatur im Bereich von 50 bis 90°C bis zur Ausbildung einer selbsttragenden Membran und
d) Tempern der aus Schritt c) erhaltenen Membran bei Temperaturen im Bereich von 120 bis 500°C, bis der Gehalt an Lösungsmitteln in der Membran weniger als 5 Gew.-% beträgt,
**dadurch gekennzeichnet, dass**
in Schritt d) die Membran bei stufenweise oder allmählich ansteigenden Temperaturen getempert wird und während des Temperns unter Spannung gehalten wird.

2. Verfahren nach Anspruch 1, wobei das Tempern über einen Zeitraum von mindestens einer Minute bis höchstens 5 Stunden erfolgt.

3. Verfahren nach einen der Ansprüche 1 bis 2, wobei die Membranen während des Temperns über mindestens einen erwärmten sich drehenden Zylinder geführt werden, dessen Mantel zumindest teilweise aus porösen Materialien bestehet, wobei die Membranen die äußere Manteloberfläche des mindestens einen Zylinders teilweise umschlingen.

4. Verfahren nach einen der Ansprüche 1 bis 3, wobei das Tempern bei einer Temperatur von 300°C über einen Zeitraum von 2 bis 10 Minuten erfolgt.

5. Verfahren nach einen der Ansprüche 1 bis 3, wobei die Membranen über mehrere Zylinder geführt werden und an jedem Folgezylinder eine höhere Temperatur angelegt wird.

6. Verfahren nach einem der Ansprüche 1 bis 3 oder 5, wobei das Tempern stufenweise bei Temperaturen von 120 bis 500°C über einen Gesamtzeitraum von weniger als 15 Minuten erfolgt.

7. Verfahren nach Anspruch 1, wobei als organische Lösungsmittel polare aprotische Lösungsmittel verwendet werden.

8. Verfahren nach Anspruch 7, wobei als organisches Lösungsmittel N,N-Dimethylacetamid verwendet wird.

9. Verfahren nach einem der Ansprüche 1 bis 8, wobei als Polyazole Polybenzimidazole verwendet werden.

10. Verfahren nach Anspruch 9, wobei von den Polybenzimidazolen Poly[2,2-(m-phenylen)-5,5 bisbenzimidazol] ausgewählt wird.

11. Verfahren nach einem der Ansprüche 1 bis 10, wobei der unlösliche Anteil der Membranen an Polyazolen in polaren aprotischen organischen Lösungsmitteln nach dem Tempern mehr als 70 Gew.-% beträgt.

## Claims

1. Process for producing membranes composed of polyazoles, which comprises the following steps:
a) production of a solution of the polyazoles in organic solvents, where a polyazole is used which in a 1% by weight solution in N,N-dimethylacetamide at 25°C has an inherent viscosity of greater than 1.1 dl/g,
b) moulding of the solution obtained to produce a membrane shape,
c) heating of the solution which has been brought into the membrane shape to a temperature in the range from 50 to 90°C until a self-supporting membrane has been formed and
d) heat treatment of the membrane obtained from step c) at temperatures in the range from 120 to 500°C until the content of solvents in the membrane is less than 5% by weight,
**characterized in that**, in step d), the membrane is heat treated at temperatures which increase stepwise or gradually and is kept under tension during the heat treatment.

2. Process according to Claim 1, wherein the heat treatment is carried out for a time of from at least one minute to not more than 5 hours.

3. Process according to either Claim 1 or 2, wherein the membranes are passed over at least one heated rotating cylinder whose cylindrical wall consists at least partly of porous materials during the heat treatment, where the membranes at least partly loop around the outer cylindrical surface of the at least one cylinder.

4. Process according to any of Claims 1 to 3, wherein the heat treatment is carried out at a temperature of 300°C for a time of from 2 to 10 minutes.

5. Process according to any of Claims 1 to 3, wherein the membranes are passed over a plurality of cylinders and a higher temperature is applied at each successive cylinder.

6. Process according to any of Claims 1 to 3 or 5, wherein the heat treatment is carried out stepwise at temperatures of from 120 to 500°C for a total time of less than 15 minutes.

7. Process according to Claim 1, wherein polar aprotic solvents are used as organic solvents.

8. Process according to Claim 7, wherein N,N-dimethylacetamide is used as organic solvent.

9. Process according to any of Claims 1 to 8, wherein polybenzimidazoles are used as polyazoles.

10. Process according to Claim 9, wherein poly[2,2-(m-phenylene)-5,5-bisbenzimidazole] is selected from among the polybenzimidazoles.

11. Process according to any of Claims 1 to 10, wherein the proportion of polyazoles which are insoluble in polar aprotic organic solvents in the membranes after the heat treatment is greater than 70% by weight.

## Revendications

1. Procédé pour la fabrication de membranes à base de polyazoles, comportant les étapes suivantes:
a) préparation d'une solution des polyazoles dans des solvants organiques, en utilisant un polyazole qui dans une solution à 1 % en poids dans du N,N-diméthylacétamide à 25 °C présente une viscosité inhérente supérieure à 1,1 dl/g,
b) transfert de la solution obtenue dans un moule à membrane,
c) chauffage à une température dans la plage de 50 à 90 °C de la solution introduite dans le moule à membrane, jusqu'à la formation d'une membrane autoporteuse et
d) traitement thermique de la membrane obtenue dans l'étape c), à des températures dans la plage de 120 à 500 °C, jusqu'à ce que la teneur en solvants de la membrane soit inférieure à 5 % en poids,
**caractérisé en ce que**
dans l'étape d) on traite thermiquement la membrane à des températures croissant progressivement ou graduellement et on la maintient sous tension pendant le traitement thermique.

2. Procédé selon la revendication 1, **caractérisé en ce que** le traitement thermique s'effectue pendant une durée d'au moins une minute à au maximum 5 heures.

3. Procédé selon la revendication 1 ou 2, **caractérisé en ce que** pendant le traitement thermique on envoie les membranes sur au moins un cylindre chauffé en rotation, dont l'enveloppe consiste au moins partiellement en matériaux poreux, les membranes s'enroulant au moins en partie sur la surface externe de l'enveloppe dudit au moins un cylindre.

4. Procédé selon l'une quelconque des revendications 1 à 3, **caractérisé en ce que** le traitement thermique s'effectue à une température de 300 °C pendant une durée de 2 à 10 minutes.

5. Procédé selon l'une quelconque des revendications 1 à 3, dans lequel on envoie les membranes sur plusieurs cylindres et on applique une température plus élevée sur chaque cylindre suivant.

6. Procédé selon l'une quelconque des revendications 1 à 3 ou 5, **caractérisé en ce que** le traitement thermique s'effectue graduellement à des températures de 120 à 500 °C pendant une durée totale de moins de 15 minutes.

7. Procédé selon la revendication 1, dans lequel on utilise comme solvants organiques des solvants polaires aprotiques.

8. Procédé selon la revendication 7, dans lequel on utilise comme solvant organique le N,N-diméthyl acétamide.

9. Procédé selon l'une quelconque des revendications 1 à 8, dans lequel on utilise comme polyazoles des polybenzimidazoles.

10. Procédé selon la revendication 9, dans lequel parmi les polybenzimidazoles on choisit le poly[2,2-(m-phénylène)-5,5-bisbenzimidazole].

11. Procédé selon l'une quelconque des revendications 1 à 10, dans lequel après le traitement thermique la fraction insoluble des membranes de polyazoles dans des solvants organiques aprotiques polaires est de plus de 70 % en poids.
